# EUROPEAN PATENT APPLICATION

(11) **EP 4 822 207 A1**
(43) Date of publication of application: **14.10.2026**
(21) Application number: 26171125.3
(22) Date of filing: 08.04.2026
(51) Int. Cl.: F16D 65/12, F16D 65/02

(54) **SEGMENT FOR A CIRCULAR SEGMENTED BRAKE DISC**

(30) Priority: 11.04.2025 IT 202500008112
(71) Applicant: Poli S.r.l., 26010 Camisano (CR) (IT)
(72) Inventor: CREMONA, Marco, I-26019 VAILATE (Cremona) (IT); DEZIO, William, I-24050 ZANICA (Bergamo) (IT); RONCHI, Nino, I-20069 VAPRIO D'ADDA (IT); ZAGHENI, Marco, I-26010 CAPERGNANICA (Cremona) (IT)
(74) Representative: Cristinelli, Luca

(57) **Abstract**

A segment (10) for a segmented circular brake disc defining an axis of rotation (x) comprises at least one first end coupling portion (12) having an end face (14) which extends into the segment (10) in a radial direction, and comprises at least one cavity (16) arranged to receive coupling means, and a braking band extending into the segment (10) in circumferential directions. The braking band has, in at least one point, a dimension in axial direction (da1) which is smaller than a dimension in axial direction (da2) of the at least one first end coupling portion (12) at the end face (14) and at a maximum dimension in axial direction of the at least one cavity (16).

## Description

### Technical sector

The present invention relates to the field of circular segmented brake discs and relates, in particular, to segmented brake discs for railway vehicles.

### Background art

In the prior art, segments for segmented brake discs are known, which have end coupling portions having one or two circular cavities arranged to receive coupling means, which allow the manufacture of such discs.

Disadvantageously, with regard to energy saving, the brake disc mass is of particular importance due to the energy absorption caused by the additional rotation of the brake disc during the motion of the vehicle.

Therefore, in the prior art, there is a need to make optimized segments to reduce energy waste as much as possible.

No alternative solutions to coupling based on one or two circular cavities are known in the prior art.

### Summary of the invention

It is the object of the present invention to provide an improved segment and an improved segmented brake disc which displays a stable coupling of the segments during braking, while at the same time displaying optimized temperature stability and mass of the segment and/or of the segmented brake disc, with respect to the solutions of the prior art.

This and other objects are fully achieved according to the present invention by virtue of a segment for a circular segmented brake disc as defined in appended claim 1 and a brake disc as defined in appended claim 12.

In brief, according to an aspect of the invention, a segment for a segmented circular brake disc defining an axis of rotation, in particular for a brake disc of a railway vehicle, comprises at least one first end coupling portion having an end face which extends into the segment in a radial direction, and comprises at least one cavity arranged to receive coupling means, and further comprises a braking band which extends into the segment in circumferential directions. The braking band has, in at least one point, a dimension in axial direction which is smaller than a dimension in axial direction of the at least one first end coupling portion at the end face and at a maximum dimension in axial direction of the at least one cavity.

According to a second aspect of the invention, a circular segmented brake disc, in particular for a railway vehicle, defines an axis of rotation and comprises a plurality of segments which have coupling means therebetween for mutual coupling.

### Brief description of the drawings

The accompanying drawings are only some embodiments of the present invention. An average person skilled in the art may obtain other embodiments from these drawings without inventive step.

The features and advantages of the present invention will be more clearly apparent from the following detailed description, made by way of non-limiting example, with reference to the accompanying drawings, in which:

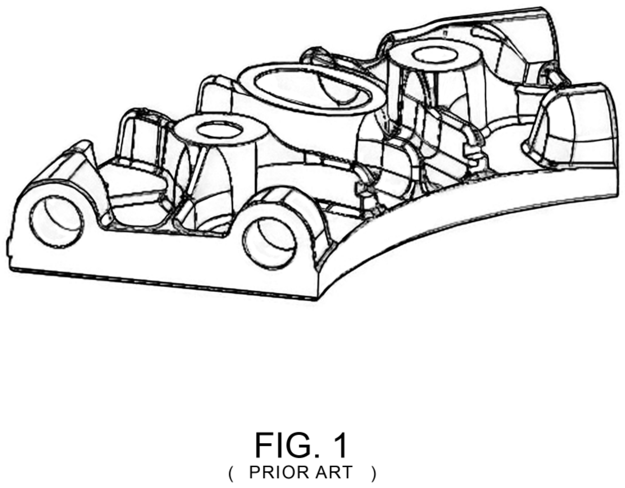

- figure 1 shows a segment according to the prior art;
- figures 2a and 2b show an embodiment of a segment according to the invention;
- figures 3a, 3b, 3c and 3d show a further embodiment of a segment according to the invention;
- figures 4a and 4b show an embodiment of a segmented brake disc according to the invention.

### Detailed description

Before explaining a plurality of embodiments of the invention in detail, it is worth noting that the application of the invention is not limited to the constructive details and to the configuration of the components presented in the following description or shown in the drawings. The invention can assume other embodiments and may be implemented or made in practice in different manners. It must also be understood that the phraseology and the terminology are only descriptive and must not be understood as limitative. The use of "include" and "comprise" and variations thereof are intended to comprise the elements enunciated below and their equivalents, as well as additional elements and equivalents thereof.

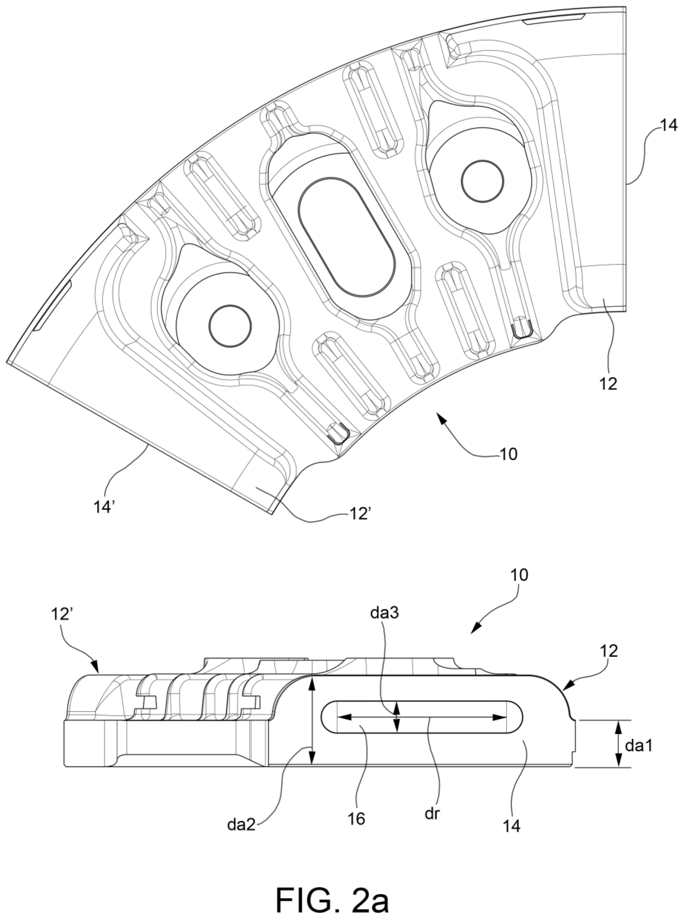

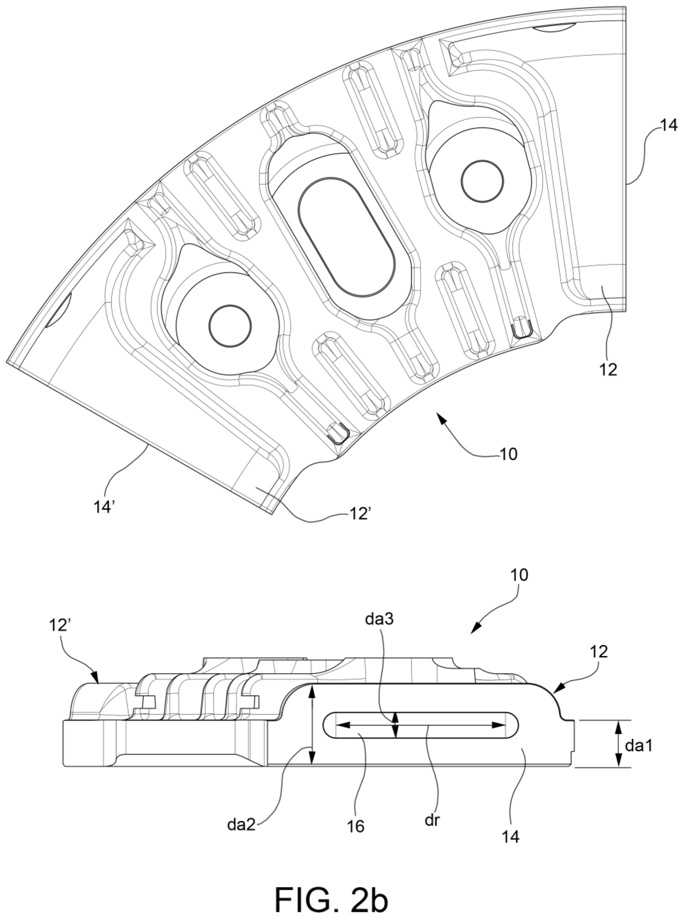

With reference to figures 2a and 2b and from 3a to 3d, embodiments of a segment 10 for a circular segmented disc brake 20 are described below.

The circular segmented brake disc 20 defines an axis of rotation x.

In other words, the circular segmented brake disc 20 may be adapted to be fixed to a wheel of the vehicle, so that it is rotatable about an axis of rotation x.

Hereafter in the present description, terms and references indicating directions such as "axial" or "radial" and "circumferential" shall be interpreted with reference to the axis of rotation x of the brake disc, unless otherwise noted.

By way of example, the segmented brake disc 20 may be adapted to be employed in a railway vehicle.

In general, a brake disc 20 is considered segmented, when it is formed by a plurality of segments 10 which are held together to form the brake disc 20 by coupling means. Preferably, the brake disc 20 comprises four, six, eight, or twelve curved segments 10 mutually coupled to one another. Preferably, the coupling means arranged between pairs of adjacent segments 10 are in the form of a pin.

The segment 10 for the brake disc 20 comprises at least one first end coupling portion 12 provided with an end face 14 which extends into the segment 10 in a radial direction.

The end face 14 comprises at least one cavity 16 (also referred to as a seat) configured to receive coupling means so as to allow coupling with a corresponding end face of an adjacent segment, forming the segmented brake disc 20.

In other words, on the end face 14 at least one cavity 16 may be formed which extends into the first end coupling portion 12.

The segment comprises a braking band which extends into the segment 10 in circumferential directions. Preferably, the braking band may have a constant thickness in the segment.

The braking band of the segment has, in at least one point, a dimension in axial direction da1 which is smaller than a dimension in axial direction da2 of the at least one first end coupling portion 12 (considered) at the end face 14 and at a maximum dimension in axial direction of the at least one cavity 16.

In other words, the dimension in axial direction da2 of the at least one first end coupling portion 12 may be measured:
a) at the end face 14; and
b) at a maximum dimension in axial direction of the at least one cavity 16 (i.e., in axial direction in which the cavity is widest).

In other words, the dimension in axial direction da2 of the at least one first end coupling portion 12 is considered as the axial thickness of the end face 14, i.e. at the end face 14, at the radial point in which the cavity 16 has its maximum axial extension.

Preferably, the braking band may extend in the segment 10 in a direction substantially perpendicular to the end face 14 of the at least one first end coupling portion 12.

The segment may also comprise a coupling face, opposite to the braking band on the segment 10 and, preferably, substantially perpendicular to the end face 14. The coupling face may be provided with a plurality of fins configured to cool the segment 10 when it overheats in use during repeated braking actions. The coupling face may be configured to be coupled to the vehicle wheel so that the fins are interposed between the vehicle wheel and the braking band, contributing to improving its cooling in use.

Preferably, the braking band of the segment at the end face 14 has a dimension in axial direction da1 which is smaller than a dimension in axial direction da2 of the at least one first end coupling portion 12 (considered) at the end face 14 and at a maximum dimension in axial direction of the at least one cavity 16.

The segment 10 may have a ratio between the dimension in axial direction da2 of the at least one first end coupling portion 12 (considered) at the end face 14 and at the maximum dimension in axial direction of the at least one cavity 16, and the dimension in axial direction da1 in at least one point of the braking band may be less than or equal to 2.5. Preferably, the ratio may be less than or equal to 1.9, even more preferably the ratio may be less than or equal to 1.5. Advantageously, this allows for a segmented brake disc 20 which is lightweight and stable during operation.

In an embodiment of the segment 10, the ratio between the dimension in axial direction da2 of the at least one first end coupling portion 12 (considered) at the end face 14 and at the maximum dimension in axial direction of the at least one cavity 16 and the dimension in axial direction da1 in the at least one point of the braking band may be greater than 1.

The at least one cavity 16 present on the end face 14 of the at least one first end coupling portion 12 may have a dimension in radial direction dr greater than the corresponding dimension in axial direction da3.

In a preferred embodiment of the segment 10, a single cavity 16 may be formed on the end face 14 of the at least one first end coupling portion 12.

By way of non-limiting example, the dimension in radial direction dr of the cavity may be measured at the opening of the cavity or at a bottom wall of the cavity (e.g., as shown in figures 2a and 2b).

For example, the cavity 16 may be in the form of a slot or slit.

For example, figures 2a and 2b show two cavities having mutually different dimensions in axial direction da3, but still smaller than the dimension in radial direction dr.

Alternatively, two or more cavities 16 in the form of slots or slits may be formed on the end face 14 of the at least one first end coupling portion 12 and axially aligned with one another.

When at least one cavity 16 having a dimension in radial direction dr greater than the dimension in axial direction da3 is present, the ratio between the dimension in radial direction dr of the cavity 16 and the dimension in axial direction da3 of the at least one cavity 16 may be comprised between 2.5 and 6.

In this embodiment, the at least one cavity 16 may have respective rounded ends so as to facilitate coupling with the respective coupling means.

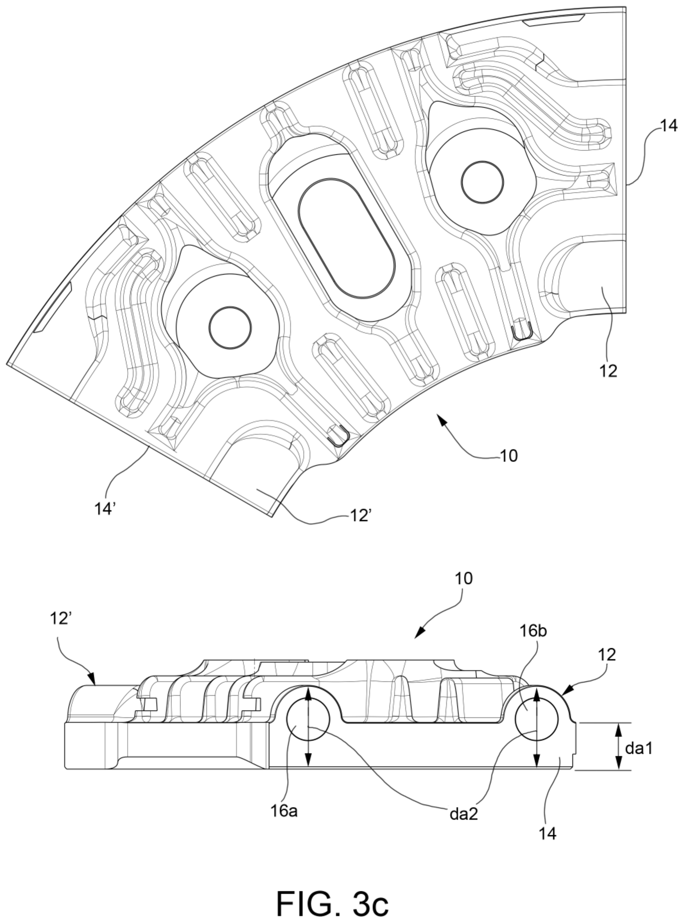

In an embodiment of the segment 10 (figure 3c), on the end face 14 of the first end coupling portion 12 at least two cavities 16a, 16b (also referred to as seats) may be formed, arranged for receiving coupling means.

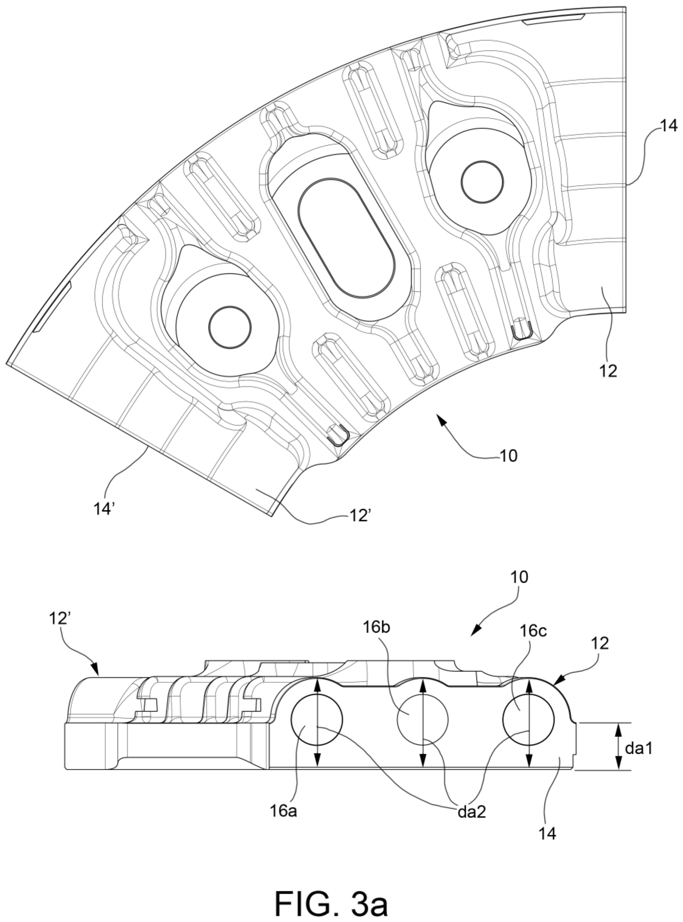

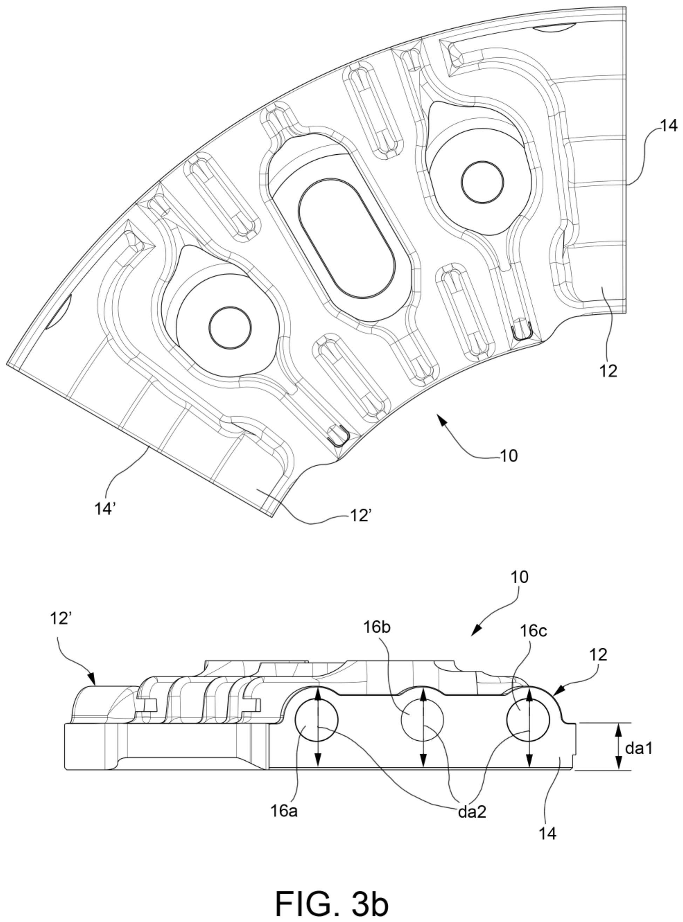

In an embodiment of the segment 10 (figure 3a and 3b), on the end face 14 of the first end coupling portion 12 at least three cavities 16a, 16b, 16c (also referred to as seats) may be formed, arranged for receiving coupling means.

For example, figures 3a and 3b show cavities having mutually different diameters, but nonetheless smaller than the dimension in axial direction da2 of the at least one first end coupling portion 12 (considered) at the end face 14 and at the maximum dimension in axial direction of the at least one cavity 16.

By way of non-limiting example, in figures 3a and 3b, the dimensions in axial direction da2 of the at least one first end coupling portion 12 are shown as equal for all three cavities.

Preferably, the cavities 16a, 16b, 16c are circular in shape.

Even more preferably, the cavities 16a, 16b, 16c have the same diameter and are axially aligned with each other.

In order to stably couple the segments 10 to one another, the segment 10 may also have a second end coupling portion 12' having a end face 14' which extends in the segment 10 in a radial direction.

The second end coupling portion 12' may be arranged at the opposite end of the segment 10 with respect to the first end coupling portion 12 so as to be configured to couple with another segment 10 different from the segment 10 with which the end face 14 of the first end coupling portion 12 couples.

In an embodiment, the end face 14' of the second coupling portion 12' may comprise at least one cavity 16 which has a dimension in radial direction greater than a dimension in axial direction, and is configured to receive coupling means. In other words, it may comprise a cavity 16 in the form of a slot or slit.

In an alternative embodiment, the end face 14' of the second coupling portion 12' may comprise at least two circular cavities 16a', 16b', each configured to receive coupling means.

Preferably, the end face 14' of the second coupling portion 12' may comprise at least three circular cavities 16a', 16b', 16c', each configured to receive coupling means.

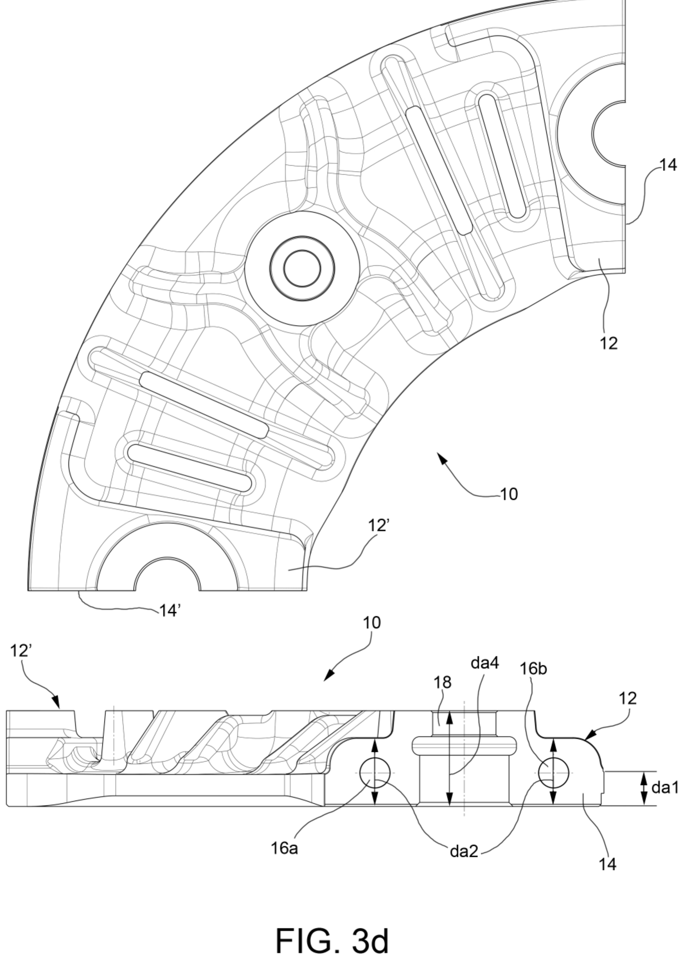

In order to fix the segments 10 forming the brake disc 20 to the wheel of the railway vehicle, each segment may comprise at least one housing seat 18 (figure 3d) for housing fixing means configured to fix the segment 10 to the wheel.

For example, the housing seat 18 may be a through hole in the segment, and the fixing means may be threaded elements, such as screws, arranged to be screwed to the wheel.

In an embodiment, the housing seat 18 may be formed on the end face 14 of the at least one first end coupling portion 12. In this embodiment, the housing seat 18 takes the form of a through hole when two of the segments 10 are coupled to each other.

The housing seat 18 may have a dimension in axial direction da4 greater than the dimension in axial direction da2 of at least one first end coupling portion 12. This configuration advantageously makes it possible to reduce the contact surface between the segment 10, and therefore of the brake disc 20, and the wheel, reducing the transfer of heat during the braking of the vehicle.

In the present description, the features of the various embodiments of the segment 10 forming the brake disc 20 are referred to a condition in which the brake disc is new, i.e., has never been used (non-worn condition). Obviously, this features may still be valid/present in the segment in a condition of total or partial wear of the segment.

In a further aspect, the present invention relates to a circular segmented brake disc.

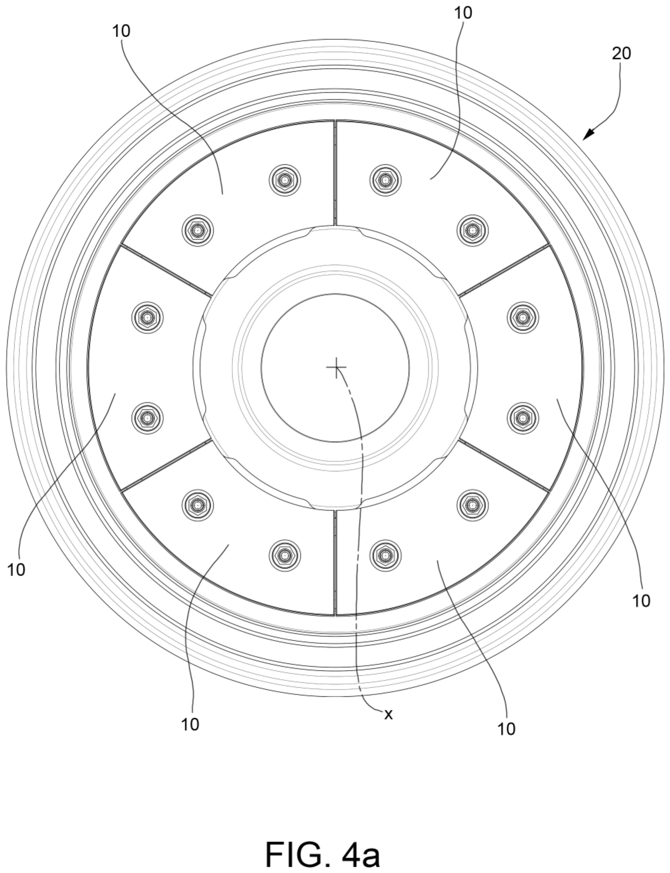

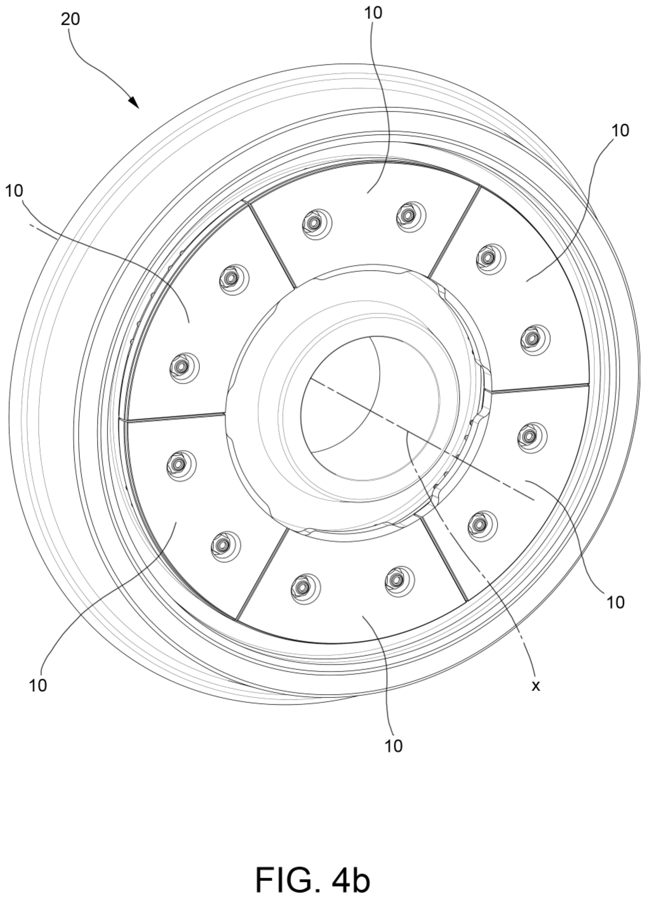

As can be observed, for example, in figures 4a and 4b, the circular segmented brake disc 20 defines an axis of rotation x.

The segmented brake disc may be particularly suitable for a railway vehicle.

The segmented brake disc comprises a plurality of segments 10 according to any one of the embodiments described above.

The segments 10 have coupling means between them for the respective coupling.

Without prejudice to the principle of the invention, the implementation details and the embodiments may be widely varied with respect to what has been described and illustrated, without thereby departing from the scope of the present invention, as identified by the claims that follow.

## Claims

1. A segment (10) for a circular segmented brake disc defining an axis of rotation (x), particularly for a railway vehicle, comprising:
- at least one first end coupling portion (12) having an end face (14), which extends into the segment (10) in a radial direction and comprises at least one cavity (16) arranged to receive coupling means;
- a braking band extending into the segment (10) in circumferential directions;
said segment (10) being **characterized in that** the braking band has, in at least one point, a dimension in axial direction (da1) which is smaller than a dimension in axial direction (da2) of the at least one first end coupling portion (12) at the end face (14) and at a maximum dimension in axial direction of the at least one cavity (16).

2. A segment (10) according to claim 1, wherein the ratio of
the dimension in axial direction (da2) of the at least one first end coupling portion (12) at the end face (14) and at the maximum dimension in axial direction of the at least one cavity (16) and
the dimension in axial direction (da1) of said at least one point of the braking band
is less than or equal to 2.5, preferably less than or equal to 1.9, preferably less than or equal to 1.5.

3. A segment (10) according to claim 1 or 2, wherein the ratio of
the dimension in axial direction (da2) of the at least one first end coupling portion (12) at the end face (14) and at the maximum dimension in axial direction of the at least one cavity (16) and
the dimension in axial direction (da1) of said at least one point of the braking band is greater than 1.

4. A segment (10) according to any one of the preceding claims, wherein said at least a cavity (16) has a dimension in radial direction (dr) greater than the dimension in axial direction (da3).

5. A segment (10) according to claim 4, wherein the ratio of the dimension in radial direction (dr) of the at least one cavity (16) and the dimension in axial direction (da3) of the cavity (16) is between 2.5 and 6.

6. A segment (10) according to claim 4 or 5, wherein the at least one cavity (16) has rounded ends.

7. A segment (10) according to any one of claims 1 to 3, wherein the end face (14) of the first end coupling portion (12) comprises at least two cavities (16a, 16b) arranged to receive coupling means.

8. A segment (10) according to any one of claims 1 to 3, wherein the end face (14) of the first end coupling portion (12) comprises at least three cavities (16a, 16b, 16c) arranged to receive coupling means.

9. A segment (10) according to claim 7 or 8, wherein said cavities (16a, 16b, 16c) are circular in shape.

10. A segment (10) according to any one of the preceding claims, wherein said segment (10) comprises a second end coupling portion (12') having an end face (14') which extends into the segment (10) in a radial direction and comprises:
- at least one cavity (16) having a dimension in radial direction greater than a dimension in axial direction and is arranged to receive coupling means; or
- at least two circular cavities (16a', 16b') and each arranged to receive coupling means.

11. A segment (10) according to any one of the preceding claims, comprising a housing seat (18) for housing fixing means adapted to fix the segment (10) to a wheel,
wherein the housing seat (18) is made on the end face (14) of at least one first portion of the end coupling (12), and
wherein said housing seat (18) has a dimension in axial direction (da4) greater than the dimension in axial direction (da2) of at least one first end coupling portion (12).

12. A circular segmented brake disc (20) defining an axis of rotation (x), particularly for a railway vehicle, and comprising a plurality of segments (10) according to any one of the preceding claims;
wherein said segments (10) have coupling means for their respective coupling.
